# EUROPÄISCHE PATENTANMELDUNG

(11) **EP 2 977 635 A2**
(43) Veröffentlichungstag der Anmeldung: **27.01.2016**
(21) Anmeldenummer: 15173686.5
(22) Anmeldetag: 24.06.2015
(51) Int. Cl.: F16D 25/08

(54) **ZENTRALAUSRÜCKER ZUR BETÄTIGUNG EINER KUPPLUNG IIN EINEM ANTRIEBSSTRANG**

(30) Priorität: 22.07.2014 DE 102014214195
(71) Anmelder: Schaeffler Technologies AG & Co. KG, 91074 Herzogenaurach (DE)
(72) Erfinder: Seitz, Martin, 76534 Baden-Baden (DE)

(57) **Zusammenfassung**

Zentralausrücker zur Betätigung einer Kupplung in einem Antriebsstrang eines Kraftfahrzeugs, aufweisend ein Gehäuse und zumindest einen Kolben, wobei der zumindest eine Kolben in dem Gehäuse geführt ist und zumindest eine Knüpfgeometrie aufweist, wobei in der zumindest einen Knüpfgeometrie zumindest eine Dichtung befestigt ist und wobei die zumindest eine Knüpfgeometrie zumindest einen Entlüftungskanal aufweist.

## Beschreibung

Kupplungen dienen in Kraftfahrzeugen regelmäßig zur Unterbrechung eines Drehmomentflusses zwischen einem Antriebsmotor und einem Antriebsstrang des Kraftfahrzeugs. Die Betätigung von Kupplungen erfolgt vorwiegend hydraulisch oder bei automatisierten Schaltgetrieben auch elektromechanisch. Die Hydraulik einer hydraulisch betätigten Kupplung umfasst insbesondere einen Geberzylinder, einen Vorratsbehälter, eine Druckleitung und einen Nehmerzylinder. Der Nehmerzylinder kann zusammen mit einem Ausrücker der Kupplung insbesondere als konzentrischer Nehmerzylinder (CSC - Concentric Slave Cylinder) ausgebildet sein, der koaxial zu einer Getriebeeingangswelle anordenbar ist. Ein solcher konzentrischer Nehmerzylinder wird auch als Zentralausrücker bezeichnet. Der Zentralausrücker weist regelmäßig ein Gehäuse mit einem Kolben auf, der mit einem hydraulischen Medium, insbesondere Öl, relativ zu dem Gehäuse verstellbar ist. Die Bewegung des Kolbens des Zentralausrückers bewirkt insbesondere die Betätigung der Kupplung. Hierzu ist ein Druckraum des Gehäuses gegenüber dem Kolben mit einer beweglichen bzw. dynamischen Dichtung abzudichten, um zu Verhindern, dass das hydraulische Medium aus dem Gehäuse austreten kann. Die Dichtung wird bei der Montage in eine Knüpfgeometrie des Kolbens gepresst, um diese an dem Kolben zu befestigen. Als nachteilig hat sich hierbei herausgestellt, dass sich beim Hineindrücken der Dichtung in die Knüpfgeometrie des Kolbens Luft in der Knüpfgeometrie eingeschlossen wird, die nachträglich durch manuelle Nacharbeit beseitig werden muss. Hierdurch entsteht ein hoher manueller Aufwand zur Nacharbeit.

Aufgabe der Erfindung ist es daher, die mit Bezug auf den Stand der Technik geschilderten Probleme zumindest teilweise zu lösen und insbesondere einen Zentralausrücker zur Betätigung einer Kupplung in einem Antriebsstrang eines Kraftfahrzeugs anzugeben, der sich durch einen reduzierten Montageaufwand auszeichnet.

Diese Aufgaben werden gelöst mit einem Zentralausrücker gemäß den Merkmalen des unabhängigen Patentanspruchs. Weitere vorteilhafte Ausgestaltungen des Zentralausrückers sind in den abhängig formulierten Patentansprüchen angegeben. Es ist darauf hinzuweisen, dass die in den abhängig formulierten Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegeben Merkmale in der Beschreibung näher präzisiert und erläutert, wobei weitere bevorzugte Ausgestaltungen der Erfindung dargestellt werden.

Der erfindungsgemäße Zentralausrücker zur Betätigung einer Kupplung in einem Antriebsstrang eines Kraftfahrzeugs weist ein Gehäuse und zumindest einen Kolben auf, wobei der zumindest eine Kolben in dem Gehäuse geführt ist und zumindest eine Knüpfgeometrie aufweist, wobei in der zumindest einen Knüpfgeometrie zumindest eine Dichtung befestigt ist und wobei die zumindest eine Knüpfgeometrie zumindest einen Entlüftungskanal aufweist.

Der hier vorgeschlagene Zentralausrücker ist insbesondere nach Art eines Nehmerzylinders als Bestandteil einer hydraulischen Betätigung einer (Reib-)Kupplung verwendbar. Eine solche hydraulische Betätigung kann insbesondere einen Geberzylinder, der insbesondere über ein Kupplungspedal eines Kraftfahrzeugs betätigbar ist, und einen Nehmerzylinder umfassen, die beide über eine Hydraulikleitung miteinander verbunden sind. Die Kupplung dient insbesondere der Unterbrechung eines Drehmomentflusses von einem Antriebsmotor auf einen Antriebsstrang des Kraftfahrzeugs, wobei es sich bei dem Antriebsmotor insbesondere um einen Verbrennungsmotor handelt.

Der Zentralausrücker weist ein Gehäuse auf, das bevorzugt im Wesentlichen aus Kunststoff oder Metall besteht. Weiterhin ist das Gehäuse bevorzugt im Wesentlichen ringförmig ausgebildet, so dass der Zentralausrücker konzentrisch um eine Getriebeeingangswelle anordenbar ist. In dem zumindest einen Gehäuse ist zumindest ein Kolben geführt, mit dem insbesondere ein Ausrücklager der Kupplung axial verstellbar ist. Ein solches Ausrücklager besteht im Wesentlichen insbesondere aus einem drehstarr auf einer Führungshülse angeordneten Lagerring und einer mit der Drehzahl der Kupplung rotierenden Lagerschale, wobei zwischen diesen beiden Bauteilen sich um eine gemeinsame Rotationsachse drehende Wälzkörper untergebracht sind. Eine axiale Verschiebung des Ausrücklagers bewirkt bspw. die Auslenkung einer Tellerfeder, die das Ein- und Ausrücken der Kupplung steuert.

Weiterhin weist der zumindest eine Kolben zumindest eine Knüpfgeometrie auf, in der zumindest eine (dynamische) Dichtung befestigt ist. Unter der Knüpfgeometrie ist insbesondere eine Nut zu verstehen, in die die zumindest eine Dichtung zumindest teilweise einsteckbar ist. Die Nut weist hierzu bevorzugt einen Hinterschnitt auf, so dass die zumindest eine Dichtung insbesondere formschlüssig in der Knüpfgeometrie befestigbar ist. Die zumindest eine (ringförmige) Dichtung besteht bevorzugt aus Gummi. Weiterhin ist die Knüpfgeometrie bevorzugt ebenfalls ringförmig ausgebildet. Zur Vermeidung, dass beim Einpressen der zumindest einen Dichtung Luft in der zumindest einen Knüpfgeometrie eingeschlossen wird, weist die zumindest eine Knüpfgeometrie zumindest einen Entlüftungskanal auf. Dieser zumindest eine Entlüftungskanal erstreckt sich ausgehend von der zumindest einen Knüpfgeometrie des Gehäuses durch das Gehäuse in einen Bereich, in den die Luft aus der zumindest einen Knüpfgeometrie entweichen kann. Der zumindest eine Entlüftungskanal ist insbesondere nach Art einer Bohrung ausgeführt. Hierdurch wird vermieden, dass sich in der zumindest einen Knüpfgeometrie ansammelnde Luft nachträglich manuell beseitigt werden muss. Bevorzugt sind entlang der zumindest einen Knüpfgeometrie eine Mehrzahl von Entlüftungskanälen angeordnet. Die einzelnen Entlüftungskanäle können dabei insbesondere über eine weitere Nut in der zumindest einen Knüpfgeometrie miteinander verbunden sein, so dass die zumindest eine Knüpfgeometrie im Wesentlichen über ihre gesamte Erstreckung mit mindestens einem Entlüftungskanal verbunden ist. Klarzustellen ist an dieser Stelle zudem, dass die zumindest eine Knüpfgeometrie auch in einem Dichtringträger des zumindest einen Kolbens ausgebildet sein kann.

Ebenfalls vorteilhaft ist es, wenn der zumindest eine Entlüftungskanal axial oder radial in dem Gehäuse ausgebildet ist. Die axiale Richtung erstreckt sich dabei insbesondere parallel zu einer Längsachse des Gehäuses. Demgegenüber erstreckt sich die radiale Richtung insbesondere orthogonal zu der axialen Richtung. Ein derart ausgebildeter Entlüftungskanal kann besonders einfach gefertigt werden.

Zudem ist es vorteilhaft, wenn die zumindest eine Dichtung eine Dichtungsknüpfgeometrie aufweist, mit der die zumindest eine Dichtung in der zumindest einen Knüpfgeometrie des zumindest einen Kolbens befestigt ist. Bei der Dichtungsknüpfgeometrie handelt es sich insbesondere um einen Bereich der zumindest einen Dichtung, dessen Geometrie im Wesentlichen kongruent zu der zumindest einen Knüpfgeometrie des zumindest einen Kolbens ausgebildet ist. Dies bedeutet mit anderen Worten, dass die Dichtungsknüpfgeometrie der zumindest einen Dichtung in die zumindest eine Knüpfgeometrie des zumindest einen Kolbens einsteckbar ist, so dass die zumindest eine Dichtung an dem zumindest einen Kolben befestigt ist.

Vorzugsweise ist der zumindest eine Kolben ringförmig ausgebildet. Hierdurch kann der zumindest eine Kolben konzentrisch um eine Getriebeeingangswelle angeordnet werden.

Ebenfalls vorteilhaft ist es, wenn die zumindest eine Dichtung ringförmig ausgebildet ist. Hierdurch kann die zumindest eine Dichtung ebenfalls konzentrisch um die Getriebeeingangswelle angeordnet werden.

Weiterhin ist es vorteilhaft, wenn der zumindest eine Kolben über einen mit einem Ausrücklager verbundenen Lagerring mit einem Ausrücklager verbunden ist.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: einen Zentralausrücker in einem Längsschnitt;
- Fig. 2:: eine Detailansicht des Zentralausrückers; und
- Fig. 3:: ein Kraftfahrzeug mit einem Zentralausrücker.

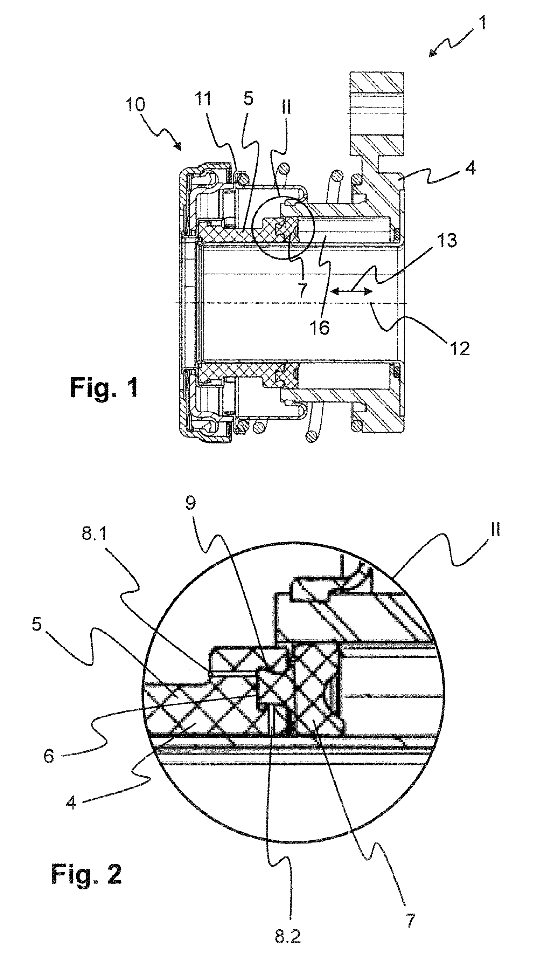

Die Fig. 1 zeigt einen Zentralausrücker 1 zur Betätigung einer hier nicht gezeigten Kupplung 2 in einem hier ebenfalls nicht gezeigten Antriebsstrang 15 eines Kraftfahrzeugs 3 in einem Längschnitt. Der Zentralausrücker 1 weist ein Gehäuse 4 auf, das ringförmig um eine Längsachse 12 ausgebildet ist. In dem Gehäuse 4 ist ein ringförmiger Kolben 5 gelagert, der hydraulisch parallel zu der Längsachse 12 in einer Längsrichtung 13 verstellbar ist. Hierzu ist der Kolben 5 durch eine Dichtung 7 gegenüber einem Druckraum 16 des Gehäuses 4 abgedichtet. Durch den Kolben 5 ist über einen Lagerring 11 ein Ausrücklager 10 betätigbar.

Die Fig. 2 zeigt eine vergrößerte Darstellung des in der Fig. 1 mit II gekennzeichneten Bereichs. Zu erkennen ist hier insbesondere eine in dem Kolben 5 ausgebildete Knüpfgeometrie 6, in die eine Dichtungsknüpfgeometrie 9 der Dichtung 7 eingepresst ist. Zur Verhinderung, dass in der Knüpfgeometrie 6 beim Einpressen der Dichtung 7 Luft eingeschlossen wird, weist die Knüpfgeometrie 6 einen axialen ersten Entlüftungskanal 8.1 und einen radialen zweiten Entlüftungskanal 8.2 auf. Bei den Entlüftungskanälen 8.1 und 8.2 handelt es sich um Bohrungen in dem Gehäuse 4.

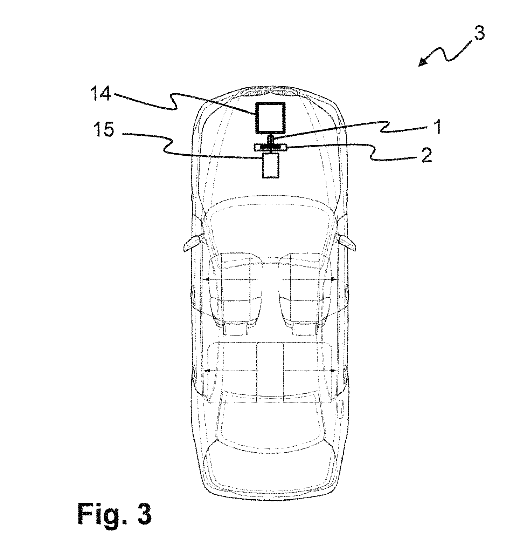

Die Fig. 3 zeigt ein Kraftfahrzeug 3 mit einem Antriebsmotor 14 und einer Kupplung 2, wobei die Kupplung 2 mit dem Zentralausrücker 1 betätigbar ist. Hierdurch kann ein Drehmomentfluss zwischen dem Antriebsmotor 14 und einem Antriebsstrang 15 des Kraftfahrzeugs 3 unterbrochen werden.

Der vorliegende Zentralausrücker zur Betätigung einer Kupplung in einem Antriebsstrang eines Kraftfahrzeugs zeichnet sich insbesondere durch eine besonders einfache Montage aus.

### Bezugszeichenliste

- 1: Zentralausrücker
- 2: Kupplung
- 3: Kraftfahrzeug
- 4: Gehäuse
- 5: Kolben
- 6: Knüpfgeometrie
- 7: Dichtung
- 8.1, 8.2: Entlüftungskanal
- 9: Dichtungsknüpfgeometrie
- 10: Ausrücklager
- 11: Lagerring
- 12: Längsachse
- 13: Längsrichtung
- 14: Antriebsmotor
- 15: Antriebsstrang
- 16: Druckraum

## Patentansprüche

1. Zentralausrücker (1) zur Betätigung einer Kupplung (2) in einem Antriebsstrang eines Kraftfahrzeugs (3), aufweisend ein Gehäuse (4) und zumindest einen Kolben (5), wobei der zumindest eine Kolben (5) in dem Gehäuse (4) geführt ist und zumindest eine Knüpfgeometrie (6) aufweist, wobei in der zumindest einen Knüpfgeometrie (6) zumindest eine Dichtung (7) befestigt ist und wobei die zumindest eine Knüpfgeometrie (6) zumindest einen Entlüftungskanal (8.1, 8.2) aufweist.

2. Zentralausrücker (1) nach Anspruch 1, wobei der zumindest eine Entlüftungskanal (8.1, 8.2) axial oder radial in dem Gehäuse (4) ausgebildet ist.

3. Zentralausrücker (1) nach einem der vorhergehenden Ansprüche, wobei die zumindest eine Dichtung (7) eine Dichtungsknüpfgeometrie (9) aufweist, mit der die zumindest eine Dichtung (7) in der zumindest einen Knüpfgeometrie (6) des zumindest einen Kolbens (5) befestigt ist.

4. Zentralausrücker (1) nach einem der vorhergehenden Ansprüche, wobei der zumindest eine Kolben (5) ringförmig ausgebildet ist.

5. Zentralausrücker (1) nach einem der vorhergehenden Ansprüche, wobei die zumindest eine Dichtung (7) ringförmig ausgebildet ist.

6. Zentralausrücker (1) nach einem der vorhergehenden Ansprüche, wobei der zumindest eine Kolben (5) über einen mit einem Ausrücklager (10) verbundenen Lagerring (11) mit einem Ausrücklager (10) verbunden ist.
